# EUROPÄISCHE PATENTSCHRIFT

(11) **EP 0 600 378 B1**
(45) Veröffentlichungstag und Bekanntmachung des Hinweises auf die Patenterteilung: **12.02.1997**
(21) Anmeldenummer: 93119017.7
(22) Anmeldetag: 25.11.1993
(51) Int. Cl.: C04B 33/24

(54) **Porzellan, Porzellanversatz sowie Verfahren zur Herstellung des Porzellans**
Porcelain, its composition and process for its manufacture
Porcelaine, sa composition et sa préparation

(30) Priorität: 30.11.1992 DE 4240191
(43) Veröffentlichungstag der Anmeldung: 08.06.1994
(73) Patentinhaber: ROSENTHAL AKTIENGESELLSCHAFT, D-95089 Selb (DE)
(72) Erfinder: Kreiner, Roswitha, D-95100 Selb (DE)
(74) Vertreter: Patentanwälte Dr. Solf & Zapf

(56) Entgegenhaltungen:
- GB-A- 1 538 646
- US-A- 3 846 098
- US-A- 3 860 432
- DATABASE WPI Section Ch, Week 8707, Derwent Publications Ltd., London, GB; Class L02, AN 87-048980 & SU-A-1 240 751 (LENINGRAD LENSOVET TECH) 30. Juni 1986

## Beschreibung

Die Erfindung betrifft ein Porzellan, insbesondere ein Geschirr-Porzellan, einen Porzellanversatz und ein Verfahren zur Herstellung des Porzellans.

Man unterscheidet derzeit in Deutschland drei Geschirr-Porzellanarten: Hartporzellan, Weichporzellan und Knochenporzellan.

Hartporzellan wird in der Regel aus einem Versatz aus 50 % Tonsubstanz, 25 % Feldspat und 25 % Quarz hergestellt, der bei 1350 - 1450 °C gebrannt wird, wobei der Glattbrand in reduzierender Atmosphäre stattfindet. Als Tonsubstanz wird grundsätzlich hellbrennender Kaolin verwendet. Feldspat wirkt als Flußmittel und wird meist in Form von Kalifeldspat oder Kali-Natronfeldspat eingesetzt.

Der gebrannte Scherben des Hartporzellans, der im wesentlichen aus Sekundärmullit, Quarz und Glasphase besteht, weist eine hohe Transparenz und einen hohen Weißgrad auf. Er zeichnet sich ferner durch eine hohe mechanische Festigkeit, gute thermische und elektrische Eigenschaften sowie ausreichende Korrosionsbeständigkeit aus.

Eine Verminderung des Quarzanteils erbringt eine Verbesserung der Temperaturwechselbeständigkeit; eine Erhöhung des Quarzanteils kann zu einer Erhöhung der mechanischen Festigkeit führen. Wird der Kaolin-Anteil auf Kosten des Quarzes erhöht, sinkt die Transparenz.

Für die Masseaufbereitung zur Herstellung von Hartporzellan werden die Rohstoffe fein zerkleinert und mit Wasser gemischt. Nach einer Formgebung erfolgt ein Trocknen und Glasieren. Die Glasur wird auf den rohen oder bei 900 - 1100 °C in oxydierender Atmosphäre verglühten Scherben aufgebracht. Der Hartporzellanbrand wird von 20 - 900 °C vorwiegend oxydierend, von 900 - 1000 °C oxydierend und von 1000 - 1450 °C im Glattbrand reduzierend durchgeführt; die Atmosphäre beim Abkühlen ist neutral oder oxydierend. Während des Brennens zeigt die Masse eine sehr gute Formbeständigkeit. Deformationen im Brand sind gering.

Für Hartporzellan werden die folgenden Eigenschaftswerte gefordert:

| | | |
|---|---|---|
| Wasseraufnahme | | 0 |
| Rohdichte | | 2,3 bis 2,4 g/cm³ |
| Druckfestigkeit ungl. | | 450 bis 550 MPa |
| Schlagbiegezähigkeit ungl. | | 23 MPa · m |
| Biegefestigkeit ungl. | | 40 bis 70 MPa |
| mittlerer linearer Wärmedehnungskoeffizient (20 bis 500 °C) | | 4,5 · 10⁻⁶ K⁻¹ |
| Weißgrad ungl. | | > 70 % |
| Transparenz bei *d* = 1 mm | | 2 bis 10 % |
| Temperaturwechselbeständigkeit | | > 165 K |
| Hauptbestandteile: | Glasphase | 64 bis 65 % |
| | Mullit | 27 +/- 1 % |
| | Quarz | 7 +/- 0,5 % |
| | Cristobalit | 2 +/- 0,5 % |

Vom Hartporzellan unterscheidet sich Weichporzellan durch einen höheren Feldspat- und Quarzanteil sowie ggf. durch einen bestimmten Gehalt an fetten, weißbrennenden Tonen im Versatz, woraus niedrigere Brenntemperaturen resultieren. Demgemäß entsprechen die Eigenschaftswerte des Weichporzellans nicht dem hohen Standard des Hartporzellans. Weichporzellane werden vornehmlich oxydierend gebrannt und sind dadurch oft elfenbeinfarbig. Ein Vorteil, der aus den niedrigeren Brenntemperaturen resultiert, ist, daß im Vergleich zum Hartporzellan eine reichere Farbskala für Dekore bzw. Glasuren zur Verfügung steht.

Knochenporzellane (Bone China) zeichnen sich durch eine hohe Transparenz, cremiges Weiß, hohen Weißgrad und gute mechanische Festigkeit aus. Der hochtransparente Scherben des Knochenporzellans ist jedoch relativ spröde. Der Versatz besteht in der Regel aus 20 - 45 % Knochenasche, 20 - 45 % Cornish-Stone und 20 - 35 % Kaolin.

Knochenasche wird aus entfetteten, extrahierten Knochen durch Veraschung unter Luftzutritt hergestellt. Sie enthält als wesentliche Mineralphase Calciumphosphat. Cornish-Stone ist ein teilweise kaolinisiertes kali- und natronfeldspathaltiges Gestein, das neben dem Feldspat Quarz, Kaolin, Glimmer und eine kleine Menge Flußspat enthält.

Die Masse zur Herstellung von Knochenporzellan ist insbesondere wegen des geringen Kaolinanteils schwieriger zu verarbeiten und schwerer zu brennen als andere Porzellanmassen. Der Brand erfolgt in oxydierender Atmosphäre bei 1200 - 1300 °C, wobei der Erstbrand der Glattbrand ist. Die Glasur wird auf den dicht gebrannten Scherben aufgetragen. Der Glasurbrand wird bei 1000 - 1140 °C durchgeführt. Der relativ niedrigen Brenntemperatur entsprechend sind die Glasuren weicher und weniger kratzfest als übliche Porzellanglasuren. Aufgrund des Masseversatzes treten im Brand relativ häufig Deformationen auf.

Beim Hartporzellan resultiert aus den hohen Glattbrandtemperaturen ein überwiegender Anteil der hohen Herstellungskosten. Es ist daher nicht unversucht geblieben, den Masseversatz so zu verändern, daß bei Gewährleistung der Eigenschaftswerte des Hartporzellans niedrigere Glattbrandtemperaturen angewendet werden können. Es ist z. B. versucht worden, die Sintereigenschaften durch die Quarzauflösung beeinflussende Mineralisatoren wie ZnO und Kreide zu verbessern (Silikattechnik 39 (1988) Heft 7, Seite 228 bis 231). Der bekannte Masseversatz ist jedoch auf spezielle, lediglich regional vorkommende Rohstoffe, wie besondere Feldspatsande, abgestellt worden, wobei dennoch die Glattbrandtemperatur mit 1350 bzw. 1380 °C noch relativ hoch liegt.

In anderen Ländern werden andere Unterteilungen der Porzellane gemacht, wobei aber ebenfalls lediglich eng ausgewählte Zusammensetzungen der Versätze zu bestimmten Eigenschaften der Produkte führen. Ein geringfügiges Verlassen bzw. Ändern der ausgewählten Zusammensetzungen der Versätze und/oder eine Veränderung der jeweiligen Brennbedingungen ergibt in der Regel unbrauchbare Produkte. Aus diesem Grund wird traditionell grundsätzlich an den Verfahrensbedingungen nichts oder nur unbedeutend wenig geändert.

In der GB-A-1 538 646 wird ein Weichporzellan beschrieben, das konventionell durch Bone China repräsentiert wird. Dabei wird in einem zweistufigen Verfahren zunächst Knochenasche in β-Kalziumphosphat umgewandelt und anschließend ein Versatz aus β-Kalziumphosphat, Kalkstein, Sericit, Kaolin, Feldspat und Quarz zusammengemischt, das Gemisch mit Wasser versetzt und zu Formkörpern geformt; die Formkörper werden bei 1200 bis 1350° C oxidierend gebrannt. Während des Brandes bildet der Quarz eine Glasphase.

Aufgabe der Erfindung ist, die Herstellung eines Porzellans mit den Eigenschaften eines Hartporzellans unter Beibehaltung der relativ einfachen Fertigungstechnologie und der üblichen Brennaggregate wirtschaftlicher und hinsichtlich der Brennbedingungen variabler zu gestalten.

Diese Aufgabe wird durch die Verwendung eines Versatzes gelöst, der die folgende chemische Zusammensetzung aufweist:
18 - 27 Gew.-% Al₂O₃
50 - 65 Gew.-% SiO₂
0,1 - 0,3 Gew.-% Fe₂O₃
0,02 - 0,1 Gew.-% TiO₂
5 - 8 Gew.-% CaO
0,15 - 0,3 Gew.-% MgO
0,5 - 2,0 Gew.-% Na₂O
2,6 - 4,0 Gew.-% K₂O
3,5 - 6,0 Gew.-% P₂O₅
Für den Versatz, der aus Tonsubstanz, Feldspat, Quarz und Knochenasche aufgebaut ist, werden hochreine Rohstoffe mit einem Fe₂O₃- und TiO₂-Gehalt von unter 0,4 Gew.-% verwendet.

Die Korngrößenverteilung der Versätze wird zweckmäßigerweise wie folgt gewählt:
< 40 µm 95 - 100 Gew.-%
< 20 µm 82 - 97 Gew.-%
< 10 µm 67 - 80 Gew.-%
< 5 µm 50 - 65 Gew.-%
< 2,5 µm 36 - 55 Gew.-%
< 1 µm 24 - 35 Gew.-%
< 0,5 µm 15 - 25 Gew.-%

Dabei sollte die Korngrößenverteilung des Quarzes wie folgt aufgebaut sein:
< 40,0 µm 88 - 100 Gew.-%
< 20,0 µm 55 - 86 Gew.-%
< 10,0 µm 30 - 55 Gew.-%
< 5,0 µm 18 - 30 Gew.-%
< 2,5 µm 8 - 15 Gew.-%
< 1,0 µm 3 - 9 Gew.-%
< 0,5 µm 1 - 6 Gew.-%

Dem Versatz wird Wasser zugemischt, so daß eine verarbeitbare Masse gebildet wird. Aus der Masse werden Gegenstände geformt, die dann getrocknet und gebrannt werden. Das Brennen erfolgt bei Temperaturen zwischen 1120 und 1220 °C. Das Brennprodukt ist ein niedrig gebranntes, transparentes Porzellan mit den mechanischen Eigenschaften des Hartporzellans und einer Brennfarbe, die von der eingestellten Ofenatmosphäre abhängig ist. In oxydierender Atmosphäre erhält man ein cremiges, dem Bone China entsprechendes Weiß und in reduzierender Atmosphäre das graustichige Weiß des Hartporzellans. Dazwischenliegende Weißtöne können durch entsprechend eingestellte Ofenatmosphäre erzielt werden, wobei jedoch die übrigen Eigenschaften des niedrig gebrannten Porzellans in allen Fällen denen des Hartporzellans entsprechen.

Der erfindungsgemäße Versatz erbringt insbesondere die folgenden Vorteile.
1. Niedrige Brenntemperatur:
   Hierbei entsteht ein wirtschaftlicher Vorteil, der es erlaubt, eine erhebliche Menge an Energie zu sparen und die Lebensdauer von Brennhilfsmitteln vervielfacht.
2. Der Versatz ist geeignet für oxydierende und reduzierende Brennatmosphäre.
3. Der Versatz ist geeignet für den Schnellbrand (4 - 6 Stunden) und den Normalbrand (10 - 18 Stunden).
4. Das Produkt weist eine hohe Transparenz auf.
5. Die Masse zeigt nur eine geringe Deformation im Brand. Dadurch sind große Vorteile beim Design und bei der Produktion gegeben; es ist ein breites Brennspektrum anwendbar, und die Einsatzmöglichkeit bei oxydierender und reduzierender Atmosphäre gegeben. Ein Scherben mit geringer Deformation im Brand schafft die Möglichkeit, wie bei Hartporzellan den wesentlich weniger komplizierten Glasurauftrag auf den saugenden Scherben durchzuführen.
6. Die physikalischen und chemischen Eigenschaftswerte, bezogen auf Transparenz, Biegebruchfestigkeit, Schlagfestigkeit, Härte, Säurebeständigkeit, Spülmaschinenfestigkeit, Mikrowellenherdeignung, Schwermetallfreiheit entsprechen den Eigenschaften von bei 1400 °C gebranntem Hartporzellan.

Mit dem neuen Versatz wird ein Alternativprodukt sowohl zu Hartporzellan als auch zu Bone China geschaffen. Der Vorteil dieses Produkts ist, daß atmosphärenabhängig die weiße Farbe beeinflußbar ist und somit bisher nie dagewesene Möglichkeiten verschiedener Erscheinungsbilder entstehen.

Die angestrebte Brenntemperaturerniedrigung auf z. B. 1200 °C konnte durch Änderung der rationellen Zusammensetzung erreicht werden.

Ziel dabei war, die für Hartporzellan üblichen Fertigungstechnologien einsetzen zu können und nicht nach der aufwendigen und komplizierten Herstellungsmethode von Bone China verfahren zu müssen. Wichtige Voraussetzung ist hierfür eine gute Standfestigkeit der Masse im Brand. Der neue Versatz besitzt einen ausgewogenen Anteil Flußmittel, Quarz und plastische Rohstoffe, um einer starken Deformation im Brand entgegenzuwirken.

Der Gefügeaufbau des Scherbens des erfindungsgemäßen, niedrig gebrannten Porzellans ist von dem des Hartporzellans und des Bone China deutlich unterscheidbar. Es liegen neben dem völlig unreagierten Quarz Primärmullit vor, der aus Feldspat und Kaolin entstanden ist und weiterhin Tricalciumphosphat und Anorthit. Umgeben ist das Ganze von Glasphase, die für die hohe Transparenz des Scherbens verantwortlich ist und in der P₂O₅ angereichert ist. Die Phasen des Hartporzellans bestehen in der Regel aus Primär- und Sekundärmullit, Glasphase und Restquarz in wechselndem Verhältnis. Der Restquarzanteil und ob überhaupt Restquarz vorhanden ist, hängt von Brenntemperatur und Haltezeit im Scharffeuer ab. Auch die Umwandlung von Primär- in Sekundärmullit wird von der Brennkurve beeinflußt. Die Phasen des Bone China bestehen aus Anorthit, Calciumorthophosphat und Quarz, wobei nur wenige Quarzpartikel vorliegen, die wegen ihrer Größe nicht vollständig reagiert haben.

Aus den Bildern 1.1 bis 4.1 ist der Unterschied im Gefüge deutlich erkennbar.

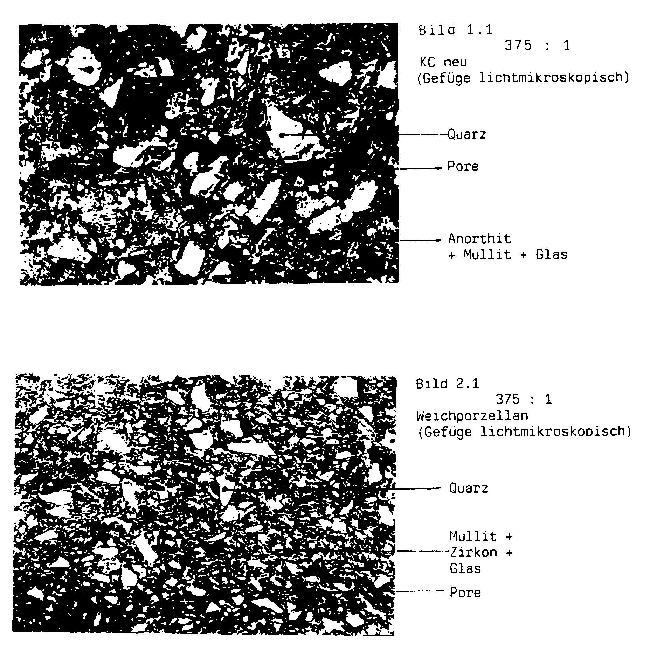

Das Gefüge des erfindungsgemäßen Porzellans (Bild 1.1) besteht aus Quarz, Anorthit, Mullit, Glas und Poren.

Der Quarzkornanteil in der Matrix beträgt vorzugsweise 18 bis 30 Gew.-%.

Das Gefüge des Weichporzellans (Bild 2.1) besteht aus Quarz, Mullit, Glas und Poren.

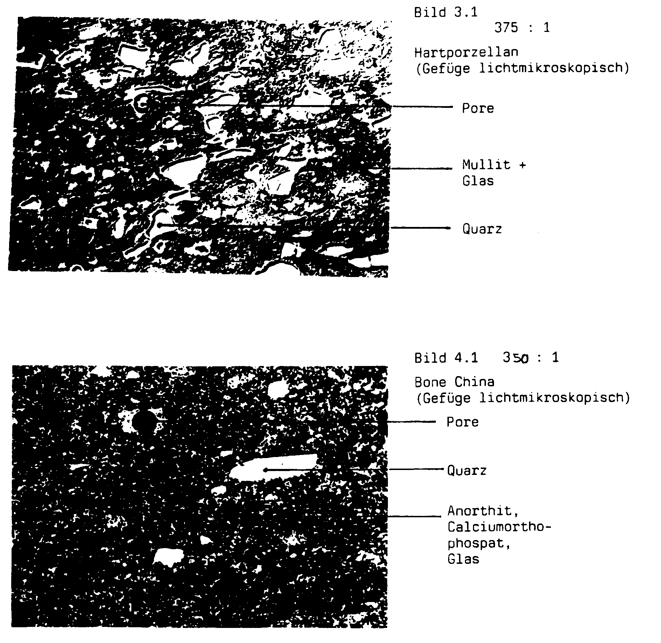

Das Gefüge des Hartporzellans (Bild 3.1) besteht aus Restquarz, Mullit, Glas und Poren.

Das Gefüge des Bone China (Bild 4.1) besteht aus Anorthit, Calciumorthophosphat und Quarz, wobei nur wenige Quarzpartikel vorliegen, die wegen ihrer Größe nicht vollständig reagiert haben.

Bekannt ist, daß mit steigender Kornfeinheit des Quarzes und des Feldspats die Verglasung und damit die Transparenz zunimmt, so daß ggf. die Brenntemperatur gesenkt werden kann. Bekannt ist ferner, daß man auf den Schmelzvorgang Einfluß nehmen kann, um z. B. bei Schnellbrandmassen etwa den gleichen hohen Schmelzphasenanteil im Scherben zu erzielen wie bei Verwendung von Normalbrandmassen (Tonindustrie-Zeitung 88(1964)Heft 11/12, Seiten 245 bis 258).

Die Erfindung ist demgegenüber einen anderen Weg gegangen und hat in überraschender Weise bei einer relativ geringen Quarzauflösung und relativ geringem Schmelzanteil dennoch dem normalen Hartporzellan entsprechende Transparenz und Festigkeiten erreicht.

Die Erfindung beinhaltet somit einen ausgewählten Masseversatz, der bei relativ niedrigen Temperaturen sowohl oxydierend als auch reduzierend und sowohl im Schnellbrand- als auch im Normalbrandverfahren gebrannt werden kann. Wesentlich ist, daß in Abhängigkeit von der Ofenatmosphäre die Farbe des Scherbens beeinflußbar ist, und zwar vom cremigen Weiß in oxydierender Atmosphäre bis zum blaugraustichigen Weiß in reduzierender Atmosphäre, wobei sämtliche Übergänge je nach verwendeter Ofenatmosphäre beim Brennen erzielbar sind.

Die relativ niedrige Brenntemperatur und die Wahlmöglichkeit der Atmosphäre ergeben zudem die Möglichkeit, die Glasurpalette verwendbarer Glasuren erheblich zu erweitern. Die Masse ist durch gelöste oder pigmentartige Farbzusätze einfärbbar und ergibt dann einen farbig transparenten Scherben. Weiterhin kann die Grundmasse mit allen in der Keramik üblichen Glasurspielarten, z.B. transparenten, opaken, deckenden, kristallausscheidenden, matten Glasuren weiß als auch farbig belegt werden.

Überraschend ist, daß trotz der im Vergleich zum üblichen Porzellan anderen Massezusammensetzung und des daraus resultierenden andersartigen Gefügeaufbaus des erfindungsgemäßen Porzellans ein sehr breites Brennintervall zur Verfügung steht und das Brennen einfach und mit bekannten Brennaggregaten durchführbar ist, wobei die Standfestigkeit des geformten Körpers während der gesamten Temperaturbehandlung optimal ist.

## Patentansprüche

1. Phosphathaltiges niedrig gebranntes Porzellan mit einer hohen Transparenz und hohen Festigkeitseigenschaften sowie den Scherbenbestandteilen Mullit, Glasphase, Quarzkörner und Poren, wobei die Glasphase Phosphat enthält und die Quarzkörner im Scherben überwiegend als unreagierte Bestandteile vorliegen.

2. Porzellan nach Anspruch 1,
dadurch **gekennzeichnet,**
daß der Phosphatgehalt von 3,5 bis 6,0 Gew.-% beträgt.

3. Porzellan nach Anspruch 1 und/oder 2,
dadurch **gekennzeichnet,**
daß das Phosphat Tricalciumphosphat ist.

4. Porzellan nach einem oder mehreren der Ansprüche 1 bis 3,
dadurch **gekennzeichnet,**
daß in der Matrix zusätzlich Anorthit vorhanden ist.

5. Porzellan nach Anspruch 4,
dadurch **gekennzeichnet,**
daß der Mullit überwiegend Primärmullit ist.

6. Porzellan nach einem oder mehreren der Ansprüche 1 bis 5,
**gekennzeichnet** durch
einen Quarzkornanteil von 18 bis 30 Gew.-% in der Matrix.

7. Porzellan nach Anspruch 6,
**dadurch gekennzeichnet,**
daß die unreagierten Quarzkörner die folgende Korngrößenverteilung aufweisen:
< 40,0 µm 88 - 100 Gew.-%
< 20,0 µm 55 - 86 Gew.-%
< 10,0 µm 30 - 55 Gew.-%
< 5,0 µm 18 - 30 Gew.-%
< 2,5 µm 8 - 15 Gew.-%
< 1,0 µm 3 - 9 Gew.-%
< 0,5 µm 1 - 6 Gew.-%

8. Porzellan nach einem oder mehreren der Ansprüche 1 bis 7,
**gekennzeichnet durch**
eine Biegefestigkeit von 80 bis 100 N/mm².

9. Porzellan nach einem oder mehreren der Ansprüche 1 bis 8,
dadurch **gekennzeichnet**,
daß die Summe des Fe₂O₃- und TiO₂-Gehalts unter 0,4 Gew.-% liegt.

10. Verfahren zur Herstellung eines Porzellans nach einem oder mehreren der Ansprüche 1 bis 9,
dadurch **gekennzeichnet,**
daß nach einer üblichen Methode zur Herstellung von Porzellan ein Prozellanversatz mit der folgenden Zusammensetzung zusammengestellt wird:
18 - 27 Gew.-% Al₂O₃
50 - 65 Gew.-% SiO₂
0,1 - 0,3 Gew.-% Fe₂O₃
0,02 - 0,1 Gew.-% TiO₂
5 - 8 Gew.-% CaO
0,15 - 0,3 Gew.-% MgO
0,5 - 2,0 Gew.-% Na₂O
2,6 - 4,0 Gew.-% K₂O
3,5 - 6,0 Gew.-% P₂O₅
und daß der Versatz bei Temperaturen zwischen 1120 und 1220°C gebrannt wird.

11. Verfahren nach Anspruch 10,
dadurch **gekennzeichnet,**
daß ein Versatz verwendet wird, der in der Summe einen Fe₂O₃- und TiO₂-Gehalt von unter 0,4 Gew.-% aufweist.

12. Verfahren nach Anspruch 10 oder 11,
dadurch **gekennzeichnet,**
daß ein Versatz verwendet wird, der aus Tonsubstanz, Feldspat, Quarz und Knochenasche zusammengesetzt ist.

13. Verfahren nach einem oder mehreren der Ansprüche 10 bis 12,
dadurch **gekennzeichnet**,
daß ein Versatz verwendet wird, in dem die Korngrößenverteilung der miteinander gemischten Rohstoffe wie folgt vorliegt:
< 40 µm 95 - 100 Gew.-%
< 20 µm 82 - 97 Gew.-%
< 10 µm 67 - 80 Gew.-%
< 5 µm 50 - 65 Gew.-%
< 2,5 µm 36 - 55 Gew.-%
< 1 µm 24 - 35 Gew.-%
< 0,5 µm 15 - 25 Gew.-%

14. Verfahren nach Anspruch 13,
dadurch **gekennzeichnet,**
daß ein Versatz verwendet wird, in dem der Quarz die folgende Korngrößenverteilung aufweist:
< 40,0 µm 88 - 100 Gew.-%
< 20,0 µm 55 - 86 Gew.-%
< 10,0 µm 30 - 55 Gew.-%
< 5,0 µm 18 - 30 Gew.-%
< 2,5 µm 8 - 15 Gew.-%
< 1,0 µm 3 - 9 Gew.-%
< 0,5 µm 1 - 6 Gew.-%

15. Verfahren nach einem oder mehreren der Ansprüche 10 bis 14,
dadurch **gekennzeichnet,**
daß zur Erzeugung eines graustichigweißen Porzellans in reduzierender Atmosphäre gebrannt wird.

16. Verfahren nach einem oder mehreren der Ansprüche 10 bis 14,
dadurch **gekenzeichnet,**
daß zur Erzeugung eines cremefarbigen Porzellans in oxydierender Atmosphäre gebrannt wird.

17. Verfahren nach einem oder mehreren der Ansprüche 10 bis 16,
dadurch **gekennzeichnet,**
daß in einem üblichen Normalbrandverfahren innerhalb von 10 bis 18 Stunden gebrannt wird.

18. Verfahren nach einem oder mehreren der Ansprüche 10 bis 16,
dadurch **gekennzeichnet,**
daß in einem üblichen Schnellbrandverfahren innerhalb von 4 bis 6 Stunden gebrannt wird.

19. Porzellanversatz zur Herstellung eines Porzellans nach einem oder mehreren der Ansprüche 1 bis 9 und zum Brennen nach einem Verfahren nach einem oder mehreren der Ansprüche 10, sowie 15 bis 18, mit folgender Zusammensetzung:
18 - 27 Gew.-% Al₂O₃
50 - 65 Gew.-% SiO₂
0,1 - 0,3 Gew.-% Fe₂O₃
0,02 - 0,1 Gew.-% TiO₂
5 - 8 Gew.-% CaO
0,15 - 0,3 Gew.-% MgO
0,5 - 2,0 Gew.-% Na₂O
2,6 - 4,0 Gew.-% K₂O
3,5 - 6,0 Gew.-% P₂O₅

20. Porzellanversatz nach Anspruch 19,
**gekennzeichnet durch**
einen Fe₂O₃- und TiO₂-Gehalt von unter 0,4 Gew.-%.

21. Porzellanversatz nach Anspruch 19 und/oder 20,
**dadurch gekennzeichnet,**
daß er aus Tonsubstanz, Feldspat, Quarz und Knochenasche zusammengesetzt ist.

22. Porzellanversatz nach einem oder mehreren der Ansprüche 19 bis 21,
**gekennzeichnet durch**
die folgende Korngrößenverteilung der miteinander gemischten Rohstoffe:
< 40 µm 95 - 100 Gew.-%
< 20 µm 82 - 97 Gew.-%
< 10 µm 67 - 80 Gew.-%
< 5 µm 50 - 65 Gew.-%
< 2,5 µm 36 - 55 Gew.-%
< 1 µm 24 - 35 Gew.-%
< 0,5 µm 15 - 25 Gew.-%

23. Porzellanversatz nach Anspruch 22,
**dadurch gekennzeichnet,**
daß der Quarz die folgende Korngrößenverteilung aufweist:
< 40,0 µm 88 - 100 Gew.-%
< 20,0 µm 55 - 86 Gew.-%
< 10,0 µm 30 - 55 Gew.-%
< 5,0 µm 18 - 30 Gew.-%
< 2,5 µm 8 - 15 Gew.-%
< 1,0 µm 3 - 9 Gew.-%
< 0,5 µm 1 - 6 Gew.-%

## Claims

1. Phosphate-containing low-fired porcelain of high transparency and high strength properties and with broken piece constituents of mullite, a glass phase, quartz grains and pores, the glass phase comprising phosphate and the quartz grains in the broken pieces predominantly being present as unreacted constituents.

2. Porcelain according to claim 1,
characterized in that
the phosphate content is from 3.5 to 6.0% by weight.

3. Porcelain according to claim 1 and/or 2,
characterized in that
the phosphate is tricalcium phosphate.

4. Porcelain according to one or more of claims 1 to 3,
characterized in that
anorthite is additionally present in the matrix.

5. Porcelain according to claim 4,
characterized in that
the mullite is predominantly primary mullite.

6. Porcelain according to one or more of claims 1 to 5,
characterized by
a quartz grain content of 18 to 30% by weight in the matrix.

7. Porcelain according to claim 6,
characterized in that
the unreacted quartz grains have the following particle size distribution:
< 40.0 µm 88 - 100% by weight
< 20.0 µm 55 - 86% by weight
< 10.0 µm 30 - 55% by weight
< 5.0 µm 18 - 30% by weight
< 2.5 µm 8 - 15% by weight
< 1.0 µm 3 - 9% by weight
< 0.5 µm 1 - 6% by weight

8. Porcelain according to one or more of claims 1 to 7,
characterized by
a flexural strength of 80 to 100 N/mm².

9. Porcelain according to one or more of claims 1 to 8,
characterized in that
the sum of the Fe₂O₃ and TiO₂ content is less than 0.4% by weight.

10. Process for the preparation of a porcelain according to one or more of claims 1 to 9,
characterized in that
a porcelain batch having the following composition is composed by a customary method for the preparation of porcelain:
18 - 27 % by weight of Al₂O₃
50 - 65 % by weight of SiO₂
0.1 - 0.3 % by weight of Fe₂O₃
0.02 - 0.1 % by weight of TiO₂
5 - 8 % by weight of CaO
0.15 - 0.3 % by weight of MgO
0.5 - 2.0 % by weight of Na₂O
2.6 - 4.0 % by weight of K₂O
3.5 - 6.0 % by weight of P₂O₅
and in that the batch is fired at temperatures between 1,120 and 1,220°C.

11. Process according to claim 10,
characterized in that
a batch which has an Fe₂O₃ and TiO₂ content in total of less than 0.4% by weight is used.

12. Process according to claim 10 or 11,
characterized in that
a batch which is composed of clay substance, feldspar, quartz and bone ash is used.

13. Process according to one or more of claims. 10 to 12,
characterized in that
a batch is used in which the particle size distribution of the raw materials mixed with one another is present as follows:
< 40 µm 95 - 100% by weight
< 20 µm 82 - 97% by weight
< 10 µm 67 - 80% by weight
< 5 µm 50 - 65% by weight
< 2.5 µm 36 - 55% by weight
< 1 µm 24 - 35% by weight
< 0.5 µm 15 - 25% by weight

14. Process according to claim 13,
characterized in that
a batch in which the quartz has the following particle size distribution is used:
< 40.0 µm 88 - 100% by weight
< 20.0 µm 55 - 86% by weight
< 10.0 µm 30 - 55% by weight
< 5.0 µm 18 - 30% by weight
< 2.5 µm 8 - 15% by weight
< 1.0 µm 3 - 9% by weight
< 0.5 µm 1 - 6% by weight

15. Process according to one or more of claims 10 to 14,
characterized in that
firing is carried out in a reducing atmosphere to produce a greyish-tinged white porcelain.

16. Process according to one or more of claims 10 to 14,
characterized in that
firing is carried out in an oxidizing atmosphere to produce a cream-coloured porcelain.

17. Process according to one or more of claims 10 to 16,
characterized in that
firing is carried out in a customary normal firing process in the course of 10 to 18 hours.

18. Process according to one or more of claims 10 to 16,
characterized in that
firing is carried out in a customary rapid-firing process in the course of 4 to 6 hours.

19. Porcelain batch for the preparation of a porcelain according to one or more of claims 1 to 9 and for firing by a process according to one or more of claims 10 and 15 to 18, having the following composition:
18 - 27 % by weight of Al₂O₃
50 - 65 % by weight of SiO₂
0.1 - 0.3 % by weight of Fe₂O₃
0.02 - 0.1 % by weight of TiO₂
5 - 8 % by weight of CaO
0.15 - 0.3 % by weight of MgO
0.5 - 2.0 % by weight of Na₂O
2.6 - 4.0 % by weight of K₂O
3.5 - 6.0 % by weight of P₂O₅

20. Porcelain batch according to claim 19,
characterized by
an Fe₂O₃ and TiO₂ content of less than 0.4% by weight.

21. Porcelain batch according to claim 19 and/or 20,
characterized in that
it is composed of clay substance, feldspar, quartz and bone ash.

22. Porcelain batch according to one or more of claims 19 to 21,
characterized by
the following particle size distribution of the raw materials mixed with one another:
< 40 µm 95 - 100% by weight
< 20 µm 82 - 97% by weight
< 10 µm 67 - 80% by weight
< 5 µm 50 - 65% by weight
< 2.5 µm 36 - 55% by weight
< 1 µm 24 - 35% by weight
< 0.5 µm 15 - 25% by weight

23. Porcelain batch according to claim 22,
characterized in that
the quartz has the following particle size distribution:
< 40.0 µm 88 - 100% by weight
< 20.0 µm 55 - 86% by weight
< 10.0 µm 30 - 55% by weight
< 5.0 µm 18 - 30% by weight
< 2.5 µm 8 - 15% by weight
< 1.0 µm 3 - 9% by weight
< 0.5 µm 1 - 6% by weight

## Revendications

1. Porcelaine phosphatique, cuite à basse température, présentant une transparence élevée et de hautes propriétés de résistance ainsi que les composants mullite, phase vitreuse, grains de quartz et pores du tesson, la phase vitreuse contenant du phosphate et les grains de quartz étant principalement présents dans le tesson sous la forme de composants qui n'ont pas réagi.

2. Porcelaine selon la revendication 1, caractérisée en ce que la teneur en phosphate vaut de 3,5 à 6,0% en poids.

3. Porcelaine selon les revendications 1 et/ou 2, caractérisée en ce que le phosphate est le phosphate tricalcique.

4. Porcelaine selon l'une ou plusieurs des revendications 1 à 3, caractérisée en ce que de l'anorthite est en outre présente dans la matrice.

5. Porcelaine selon la revendication 4, caractérisée en ce que la mullite est principalement de la mullite primaire.

6. Porcelaine selon l'une ou plusieurs des revendications 1 à 5, caractérisée par une teneur en grains de quartz de 18 à 30% en poids dans la matrice.

7. Porcelaine selon la revendication 6, caractérisée en ce que les grains de quartz qui n'ont pas réagi présentent la distribution granulométrique suivante:
< 40,0 µm 88 - 100% en poids
< 20,0 µm 55 - 86% en poids
< 10,0 µm 30 - 55% en poids
< 5,0 µm 18 - 30% en poids
< 2,5 µm 8 - 15% en poids
< 1,0 µm 3 - 9% en poids
< 0,5 µm 1 - 6% en poids

8. Porcelaine selon l'une ou plusieurs des revendications 1 à 7, caractérisée par une résistance à la flexion de 80 à 100 N/mm².

9. Porcelaine selon l'une ou plusieurs des revendications 1 à 8, caractérisée en ce que la somme des teneurs en Fe₂O₃ et en TiO₂ est inférieure à 0,4% en poids.

10. Procédé pour la fabrication de porcelaine selon l'une ou plusieurs des revendications 1 à 9, caractérisé en ce que l'on prépare suivant un procédé habituel de fabrication de porcelaine une pâte de porcelaine qui présente la composition suivante:
18 - 27 % en poids Al₂O₃
50 - 65 % en poids SiO₂
0,1 - 0,3 % en poids Fe₂O₃
0,02 - 0,1 % en poids TiO₂
5 - 8 % en poids CaO
0,15 - 0,3 % en poids MgO
0,5 - 2,0 % en poids Na₂O
2,6 - 4,0 % en poids K₂O
3,5 - 6,0 % en poids P₂O₅
et que l'on cuit la pâte à des températures situées entre 1120 et 1220°C.

11. Procédé selon la revendication 10, caractérisé en ce que l'on utilise une pâte qui présente une teneur en Fe₂O₃ et en TiO₂ dont la somme est inférieure à 0,4% en poids.

12. Procédé selon la revendication 10 ou 11, caractérisé en ce que l'on utilise une pâte qui est composée d'une substance argileuse, de feldspath, de quartz et de cendre d'os calciné.

13. Procédé selon l'une ou plusieurs des revendications 10 à 12, caractérisé en ce que l'on utilise une pâte dans laquelle la distribution granulométrique des matières premières mélangées ensemble est la suivante:
< 40 µm 95 - 100% en poids
< 20 µm 82 - 97% en poids
< 10 µm 67 - 80% en poids
< 5 µm 50 - 65% en poids
< 2,5 µm 36 - 55% en poids
< 1 µm 24 - 35% en poids
< 0,5 µm 15 - 25% en poids

14. Procédé selon la revendication 13, caractérisé en ce que l'on utilise une pâte dans laquelle le quartz présente la distribution granulométrique suivante:
< 40,0 µm 88 - 100% en poids
< 20,0 µm 55 - 86% en poids
< 10,0 µm 30 - 55% en poids
< 5,0 µm 18 - 30% en poids
< 2,5 µm 8 - 15% en poids
< 1,0 µm 3 - 9% en poids
< 0,5 µm 1 - 6% en poids

15. Procédé selon l'une ou plusieurs des revendications 10 à 14, caractérisé en ce que, pour créer une porcelaine blanche piquée de gris, on effectue la cuisson dans une atmosphère réductrice.

16. Procédé selon l'une ou plusieurs des revendications 10 à 14, caractérisé en ce que, pour créer une porcelaine de couleur crème, on effectue la combustion dans une atmosphère oxydante.

17. Procédé selon l'une ou plusieurs des revendications 10 à 16, caractérisé en ce que l'on effectue la cuisson dans un procédé de cuisson normal habituel, qui s'étend sur 10 à 18 heures.

18. Procédé selon l'une ou plusieurs des revendications 10 à 16, caractérisé en ce que l'on effectue la cuisson dans un procédé de cuisson rapide habituel, qui s'étend sur 4 à 6 heures.

19. Composition de porcelaine en vue de la fabrication d'une porcelaine selon l'une ou plusieurs des revendications 1 à 9 et de la cuisson par un procédé selon l'une ou plusieurs des revendications 10 et 15 à 18, qui présente la composition suivante:
18 - 27 % en poids Al₂O₃
50 - 65 % en poids SiO₂
0,1 - 0,3 % en poids Fe₂O₃
0,02 - 0,1 % en poids TiO₂
5 - 8 % en poids CaO
0,15 - 0,3 % en poids MgO
0,5 - 2,0 % en poids Na₂O
2,6 - 4,0 % en poids K₂O
3,5 - 6,0 % en poids P₂O₅

20. Composition de porcelaine selon la revendication 19, caractérisée par une teneur en Fe₂O₃ et TiO₂ inférieure à 0,4% en poids.

21. Composition de porcelaine selon les revendications 19 et/ou 20, caractérisée en ce qu'elle est constituée d'une substance argileuse, de feldspath, de quartz et de cendre d'os calciné.

22. Composition de porcelaine selon l'une ou plusieurs des revendications 19 à 21, caractérisée par la distribution granulométrique suivante des matières premières mutuellement mélangées:
< 40 µm 95 - 100% en poids
< 20 µm 82 - 97% en poids
< 10 µm 67 - 80% en poids
< 5 µm 50 - 65% en poids
< 2,5 µm 36 - 55% en poids
< 1 µm 24 - 35% en poids
< 0,5 µm 15 - 25% en poids

23. Composition de porcelaine selon la revendication 22, caractérisée en ce que le quartz présente la distribution granulométrique suivante:
< 40,0 µm 88 - 100% en poids
< 20,0 µm 55 - 86% en poids
< 10,0 µm 30 - 55% en poids
< 5,0 µm 18 - 30% en poids
< 2,5 µm 8 - 15% en poids
< 1,0 µm 3 - 9% en poids
< 0,5 µm 1 - 6% en poids
